# EUROPÄISCHE PATENTSCHRIFT

(11) **EP 2 394 505 B1**
(45) Veröffentlichungstag und Bekanntmachung des Hinweises auf die Patenterteilung: **13.02.2013**
(21) Anmeldenummer: 11001672.2
(22) Anmeldetag: 01.03.2011
(51) Int. Cl.: A01D 78/10

(54) **Heuwerbungsmaschine**
Haymaking machine
Machine de fenaison

(30) Priorität: 12.06.2010 DE 102010023573
(43) Veröffentlichungstag der Anmeldung: 14.12.2011
(73) Patentinhaber: CLAAS Saulgau GmbH, 88348 Bad Saulgau (DE)
(72) Erfinder: Altepost, Helmut, 48477 Hörstel-Riesenbeck (DE); Friel, Holger, 19288 Glaisin (DE); Geng, Manfred, 88348 Bad Saulgau (DE)

(56) Entgegenhaltungen:
- EP-A1- 1 488 685
- EP-A1- 1 839 480
- EP-A1- 2 022 317

## Beschreibung

Die Erfindung betrifft eine Heuwerbungsmaschine gemäß dem Oberbegriff des unabhängigen Anspruchs 1.

Die Erfindung bezieht sich auf eine Heuwerbungsmaschine, insbesondere zum Schwaden von landwirtschaftlichem Halmgut, mit sechs umlaufend angetriebenen, über Stützräder auf dem Erdboden abstützbaren, sowie über Ausleger aus einer Arbeits- und Betriebsstellung in eine verschwenkte Transportstellung überführbare Rechkreiseln, in Fahrtrichtung im Wesentlichen in v-förmiger Anordnung.

### Stand der Technik

Eine Heuwerbungsmaschine der vorgenannten Art ist beispielsweise aus der EP 1 488 685 A1 bekannt. Bei dieser Maschine sind sechs Rechkreisel in Fahrtrichtung in im wesentlichen V-förmiger Anordnung vorgesehen, die an klappbaren Querauslegern geführt sind und welche zugleich an V-förmigen ein- und ausschwenkbaren Längsausleger gehaltert sind, und wobei jeweils drei einander zugeordnete Rechkreisel in Fahrtrichtung beidseitig eines Zugbalkens hintereinander angeordnet sind. Die zwei vordersten in Fahrtrichtung vorgeordneten Rechkreisel bestimmen die maximale Arbeitsbreite und sie sind vor einer gelenkten oder ungelenkten Maschinenachse gelegen. Zur Überführung in ihre Transportstellung sind die jeweiligen Rechkreisel mittels der Längsausleger einwärts zu verschwenken.

Dabei sind die Rechkreisel an diesen Auslegern an einem längenveränderbaren Zugbalken gehaltert, die es ermöglichen, die äußeren Rechkreisel in eine über Stützräder aufweisende Fahrwerke gegenüber dem Erdboden abstützen, mit einem Maschinenrahmen, der aus einem zentralen Zugbalken und zwei diesem Zugbalken scherenartig zugeordneten, um zumindest etwa vertikale Schwenkachsen zwischen einer Arbeits- und Betriebsstellung und einer Transportstellung überführbaren Schwenkbalken zur Aufnahme der Kreiselrechen, aufgebaut ist, wobei zur Anlenkung der Kreiselrechen an den Schwenkbalken weitere Ausleger vorgesehen sind, die zwischen einer etwa horizontalen Arbeitslage und einer annähernd vertikalen Transportlage verschwenkbar sind, wobei den Schwenkbalken Lenker zugeordnet sind, welche einenends schwenkbar an dem zentralen Zugbalken angelenkt sind und durch die während der Schwenkbewegung der Schwenkbalken selbsttätig die Ausrichtung der Ausleger in Bezug zu den Schwenkbalken veränderbar ist.

### Aufgabenstellung

Aufgabe der Erfindung ist es, eine verbesserte Heuwerbungsmaschine der eingangs beschriebenen Art vorzuschlagen, mit dem Ziel, eine möglichst geringe Gespannlänge, sowohl in der Arbeits- als auch in der Transportfahrt und dadurch verbesserte Lenkelgenschaften für das Gespann Zugfahrzeug mit angehängler Heuwerbungsmaschine zu erreichen, welches zudem eine verbesserte visuelle Kontrolle über die äußeren Rechkreisel für die Bedienperson in der Arbeitsfahrt mit geringerem technischen Aufwand liefern soll.

über Stützräder aufwelsende Fahrwerke gegenüber dem Erdboden abstützen, mit einem Maschinenrahmen, der aus einem zentralen Zugbalken und zwei diesem Zugbalken scherenartig zugeordneten, um zumindest etwa vertikale Schwenkachsen zwischen einer Arbeits- und Betriebsstellung und einer Transportstellung überführbare Schwenkbalken zur Aufnahme der Kreiselrechen, aufgebaut ist, wobei zur Anlenkung der Kreiselrechen an den Schwenkbalken weitere Ausleger vorgesehen sind, die zwischen einer etwa horizontalen Arbeitslage und einer annähernd vertikalen Transportlage verschwenkbar sind, wobei den Schwenkbalken Lenker zugeordnet sind, welche einenends schwenkbar an dem zentralen Zugbalken angelenkt sind und durch die während der Schwenkbewegung der Schwenkbalken selbsttätig die Ausrichtung der Ausleger in Bezug zu den Schwenkbalken veränderbar ist.

### Aufgabenstellung

Aufgabe der Erfindung ist es, eine verbesserte Heuwerbungsmaschine der eingangs beschriebenen Art vorzuschlagen, mit dem Ziel, eine möglichst geringe Gespannlänge, sowohl in der Arbeits- als auch in der Transportfahrt und dadurch verbesserte Lenkeigenschaften für das Gespann Zugfahrzeug mit angehängter Heuwerbungsmaschine zu erreichen, welches zudem eine verbesserte visuelle Kontrolle über die äußeren Rechkreisel für die Bedienperson in der Arbeitsfahrt mit geringerem technischen Aufwand liefern soll.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Indem die äußeren Rechkreisel an Auslegern angelenkt sind, die zugleich horizontal und vertikal verschwenkbare Ausleger sind, und die dabei zugleich eine Verlängerung des V-förmig verschwenkbaren Längszugträgers darstellen, ist es möglich, die äußeren Rechkreisel in Verbindung mit dem Schwenkvorgang der Längsausleger wahlweise nach außen in eine bodennahe und die Arbeitsbreite bestimmende Arbeitsstellung zu verschwenken, oder umgekehrt in eine bodenferne Transportposition derart zu verschwenken, dass die äußeren Rechkreisel im Wesentlichen in einer Höhe oberhalb des Zugbalkens und der Längszugträger liegen, wobei sie dabei zugleich eine Lage zwischen den beiden Längsträgern einnehmen und sie dabei in ihrer räumlichen Ausdehnung zumindest teilweise den Raum zwischen den ebenfalls hochgeklappten benachbarten zurückliegenden und in Fahrtrichtung nachgeordneten Rechkreiseln einnehmen.

Diese Ausgestaltung des Verschwenkmechanismus der äußeren Rechkreisel ermöglicht eine optimal kurze Baulänge des Zugbalkens und daran gekoppelt eine ebenfalls kurze Baulänge, sowohl in der Arbeits- als auch in der Transportstellung der Heuwerbungsmaschine, wodurch die erfinderische Aufgabenstellung verwirklicht ist. Weitere vorteilhafte Ausgestaltungen der Erfindung sind dem nachfolgend beschriebenen Ausführungsbeispiel zu entnehmen.

### Ausführungsbeispiel

Die nachfolgenden Figurendarstellungen zeigen:
- Fig. 1: Heuwerbungsmaschine ausgebildet als Sechskreiselschwader in einer Draufsicht in Arbeitsstellung mit vorgespanntem Zugfahrzeug
- Fig. 2: Heuwerbungsmaschine ausgebildet als Sechskreiselschwader gemäß Fig.1 in einer Vorderansicht in Arbeitsstellung mit vorgespanntem Zugfahrzeug
- Fig. 3: Heuwerbungsmaschine ausgebildet als Sechskreiselschwader gemäß Fig.1 in einer Ansicht von hinten in Fahrtrichtung gesehen in Arbeitstellung mit vorgespanntem Zugfahrzeug

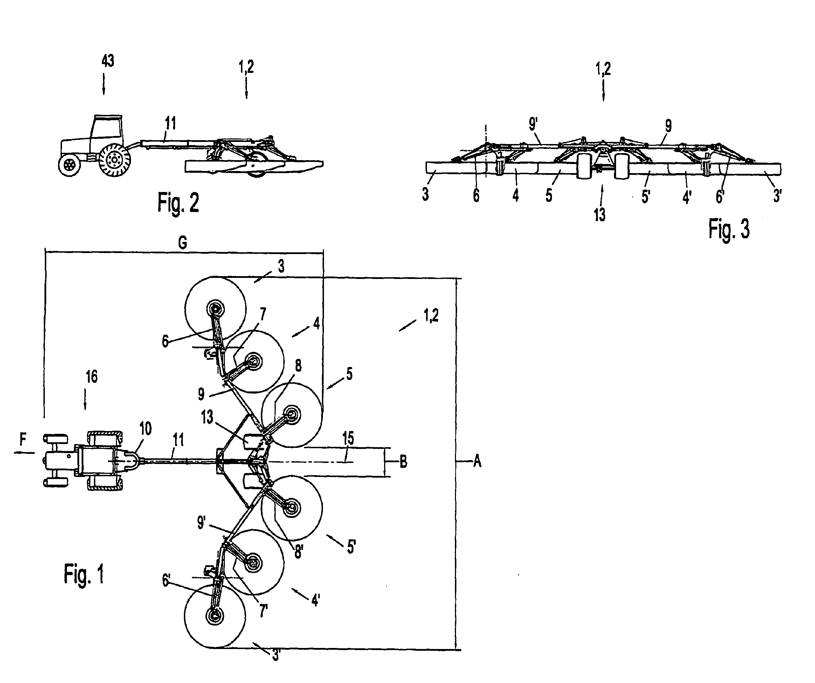

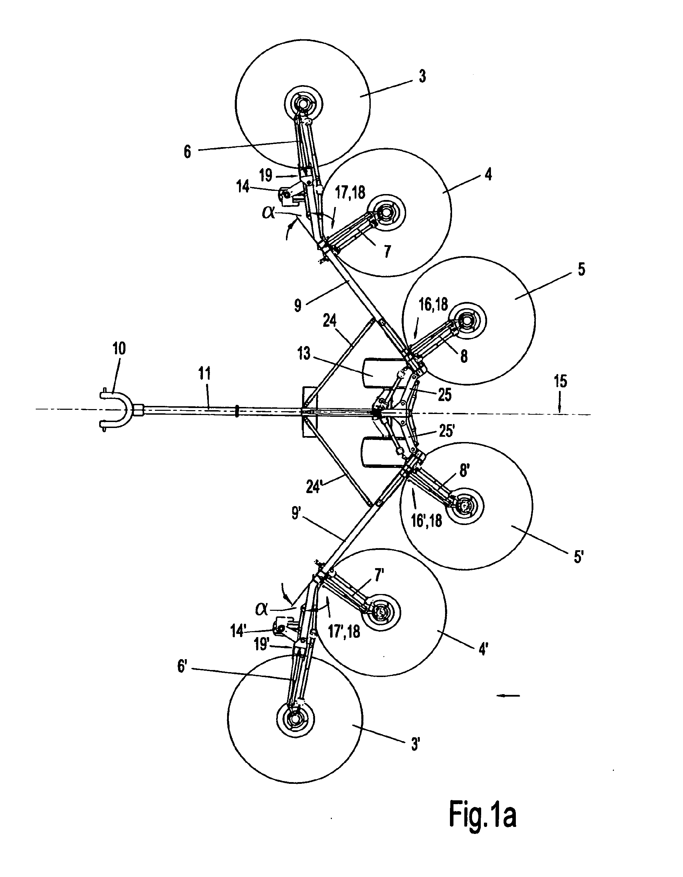

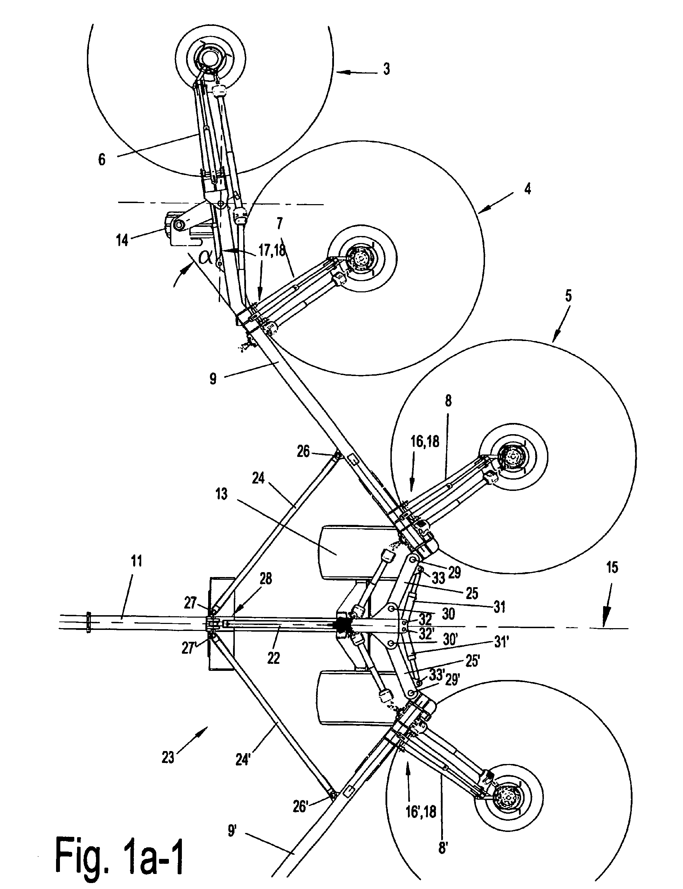

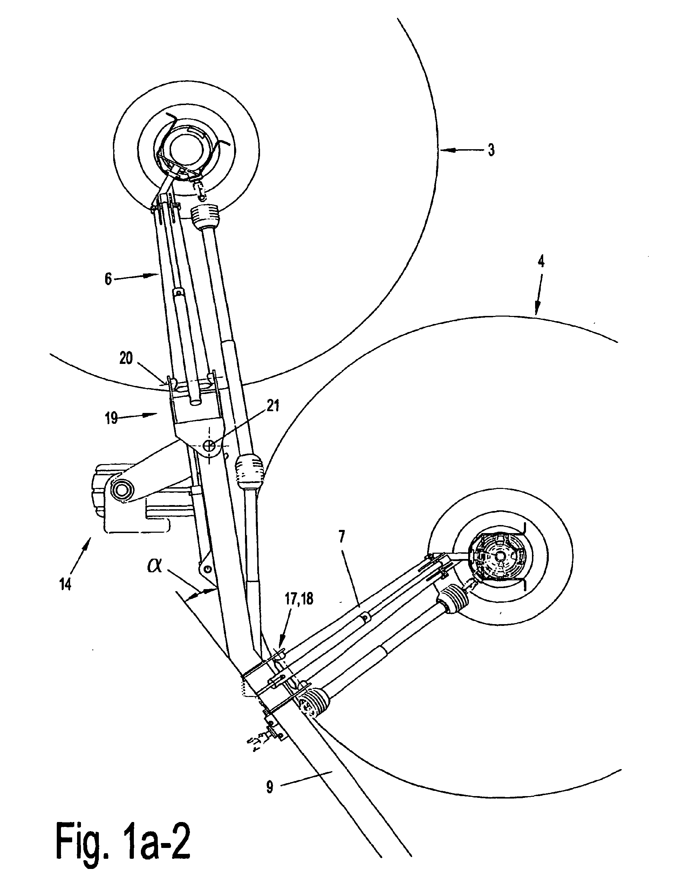

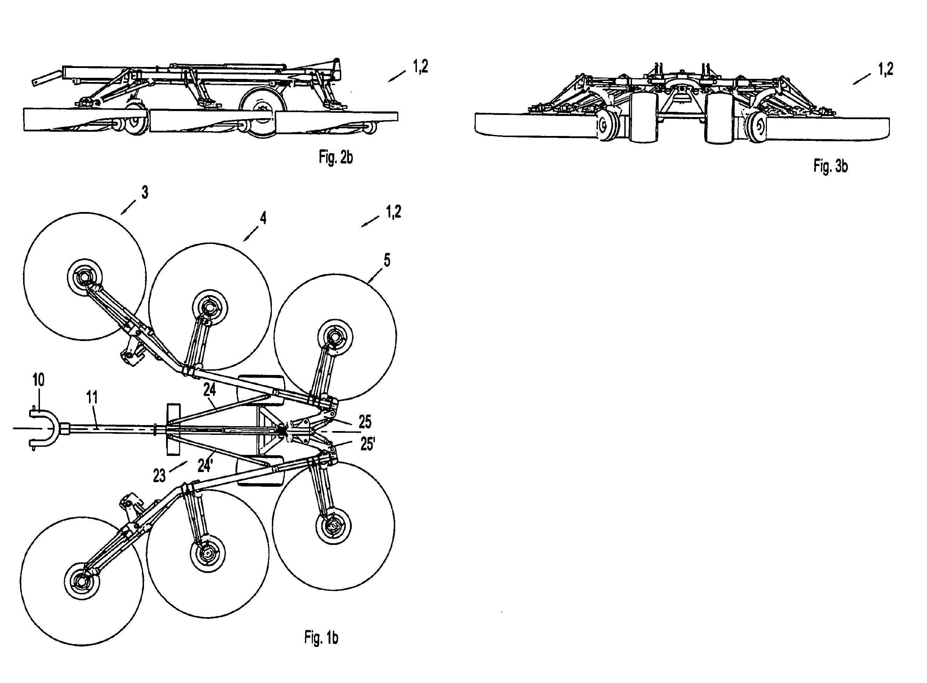

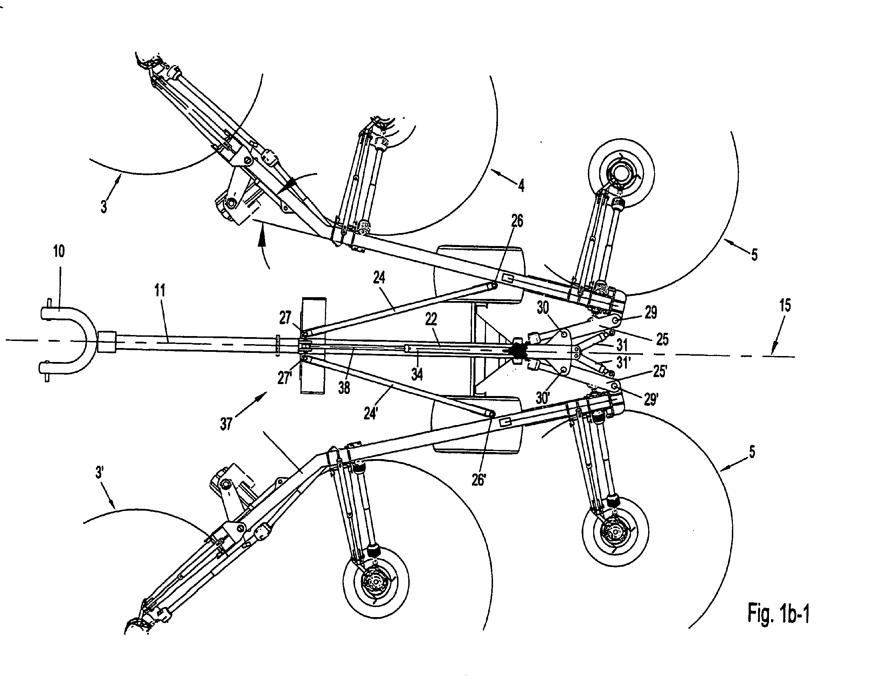

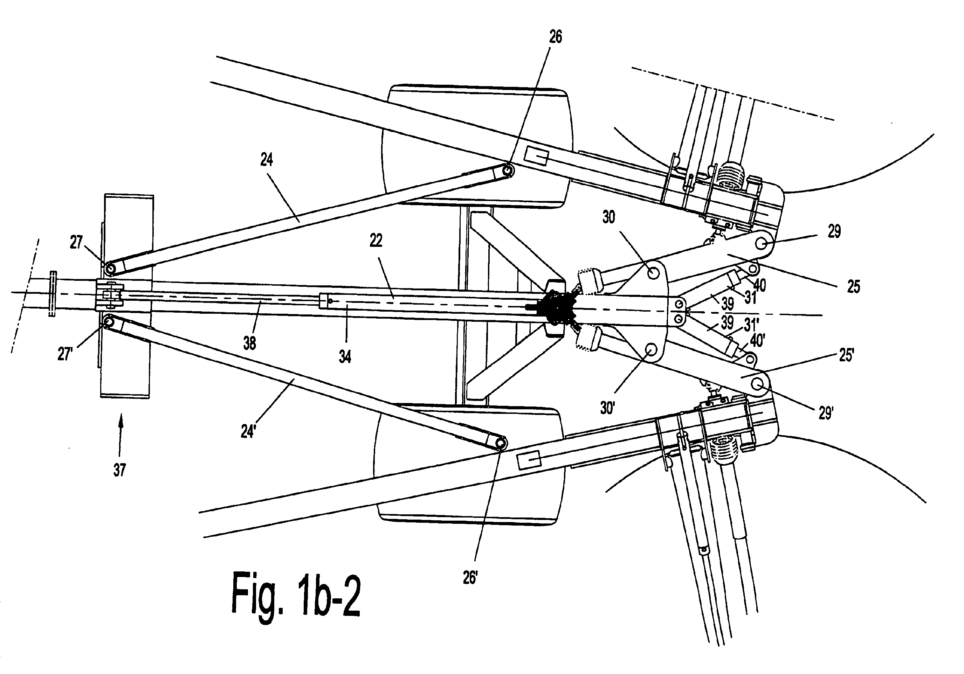

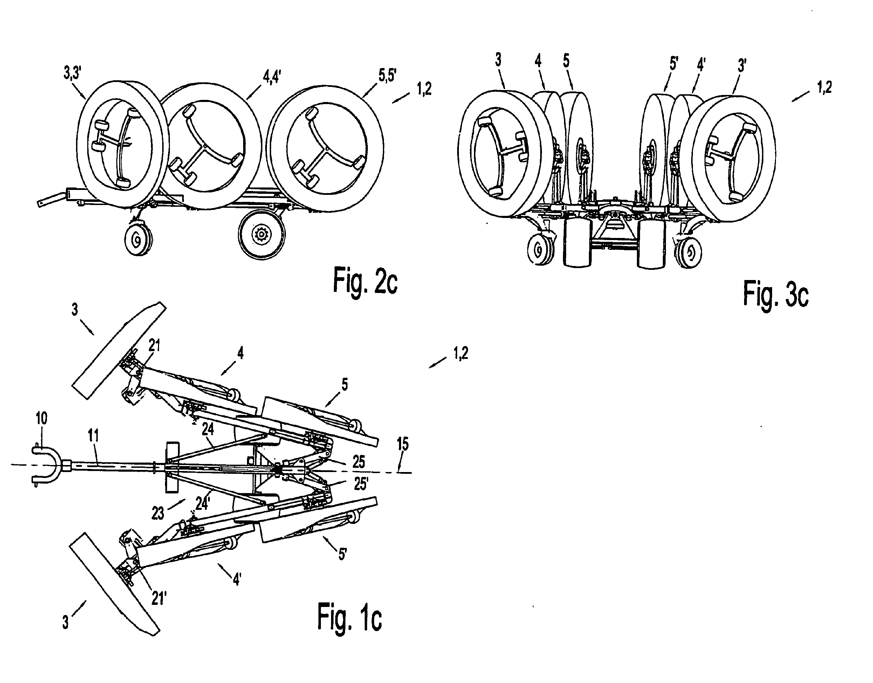

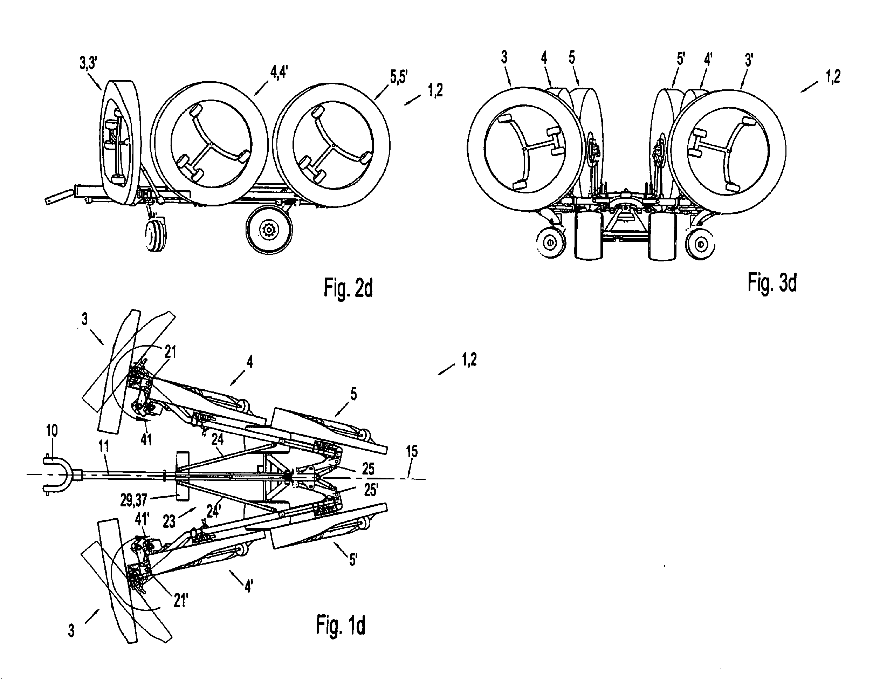

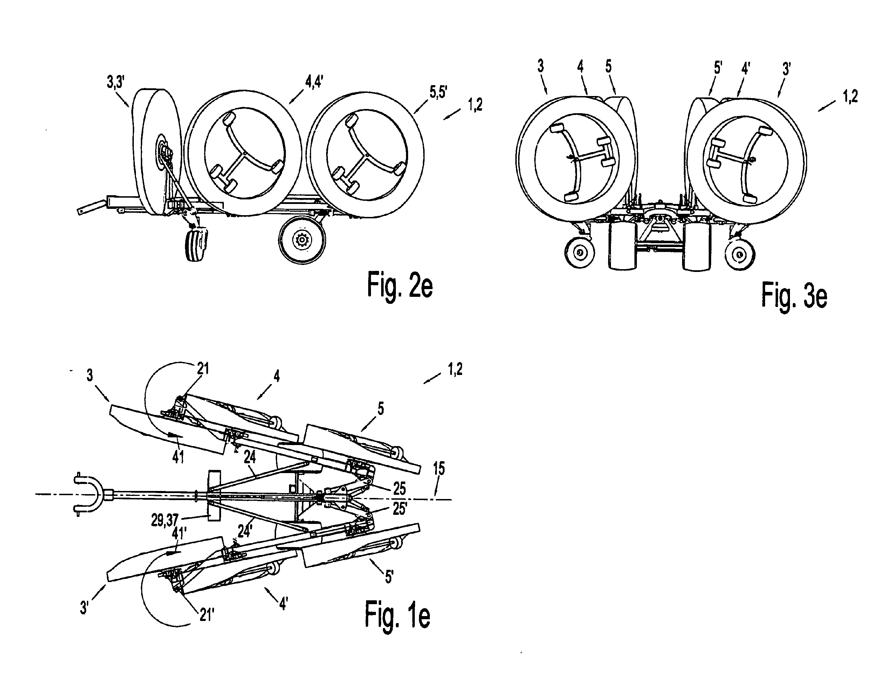

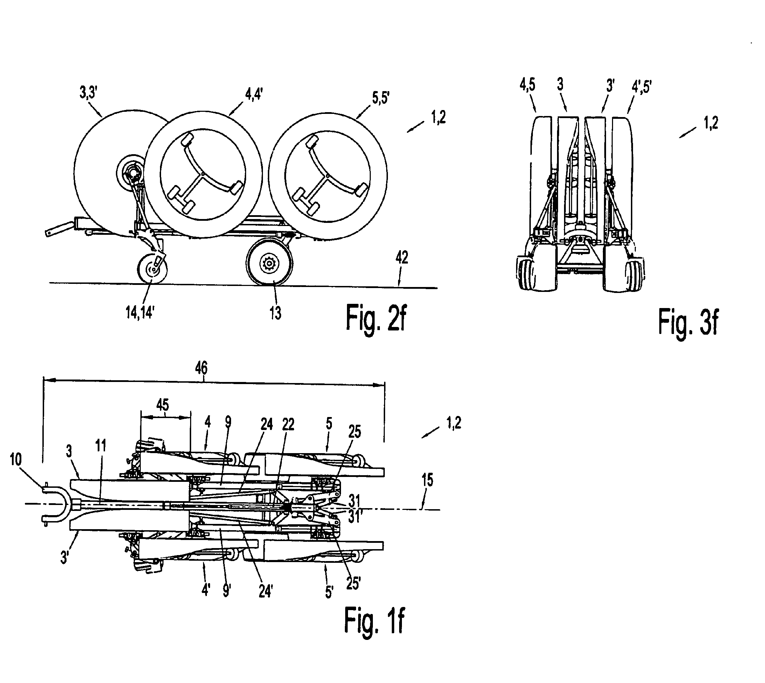

- Fig.1a: Vergrößerte Darstellung der Fig. 1 ohne Zugfahrzeug
- Fig.1a-1: Vergrößerte Darstellung der rechten Hälfte der Heuwerbungsmaschine aus der Fig. 1 a in Fahrtrichtung gesehen
- Fig.1a-2: Vergrößerte Darstellung des äußeren Rechkreisels und seiner Anlenkung an den Längsträger gemäß Fig.1a-1

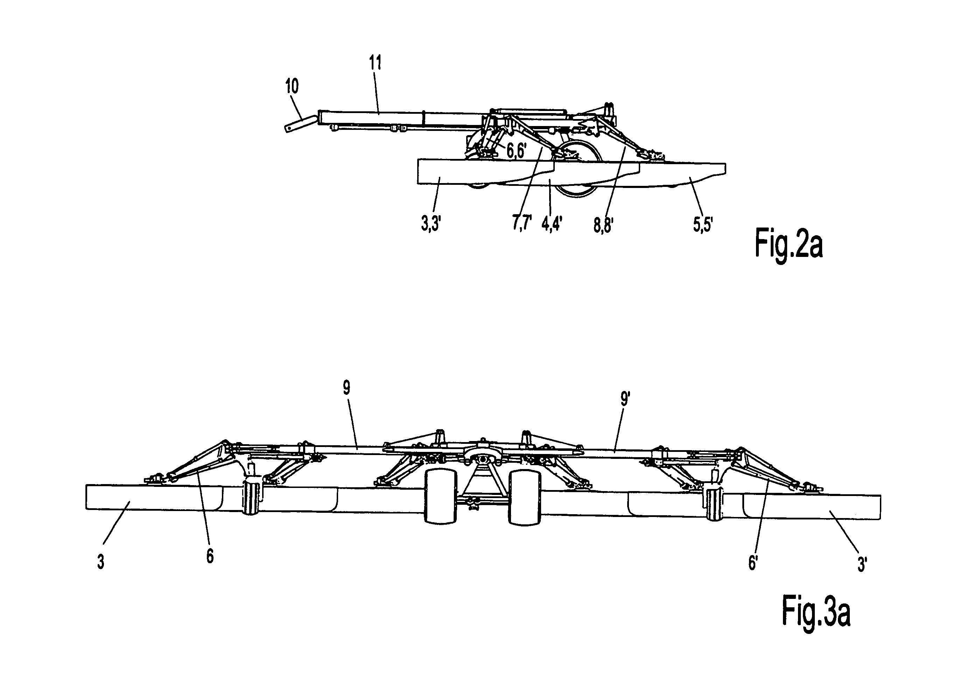

- Fig.2a: Vergrößerte Darstellung der Fig. 2 ohne Zugfahrzeug

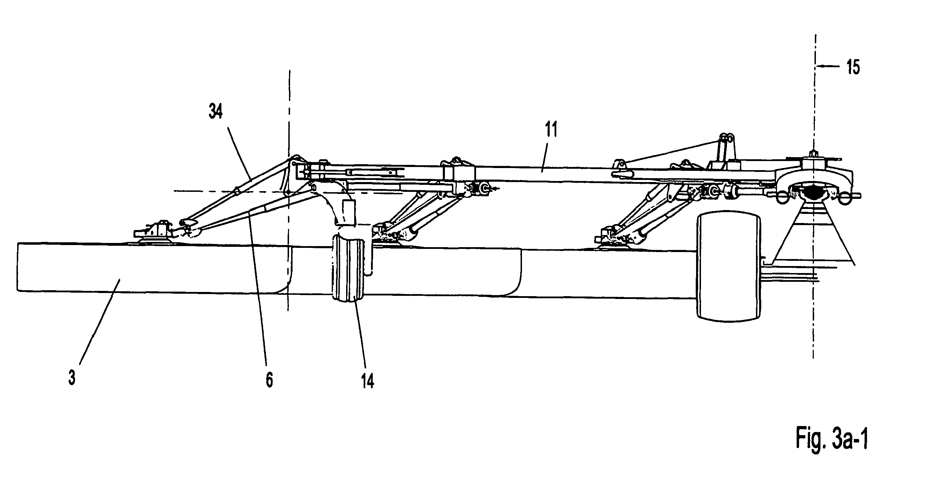

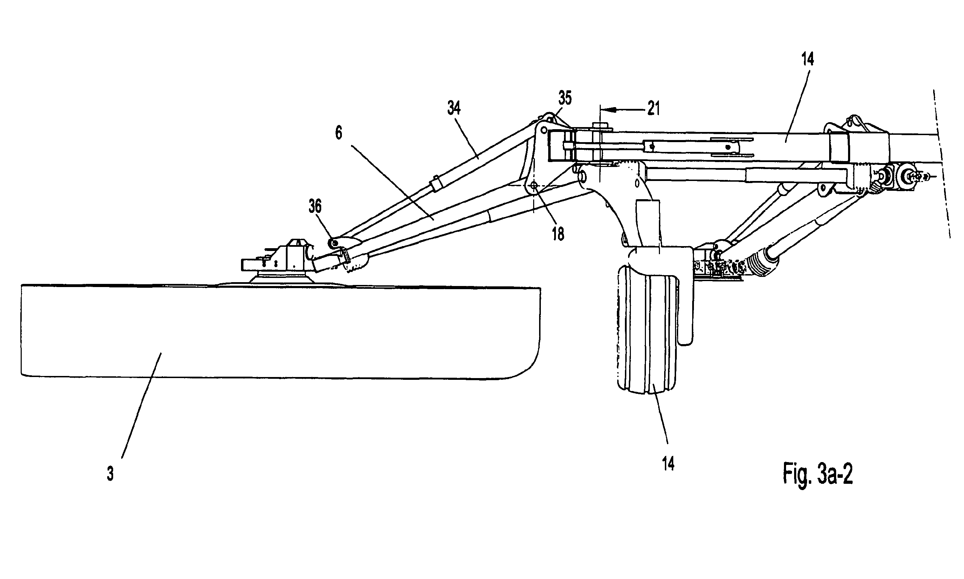

- Fig.3a: Vergrößerte Darstellung der Fig. 3
- Fig.3a-1: Vergrößerte Darstellung der linken Hälfte der Heuwerbungsmaschine aus der Fig. 3a
- Fig.3a-2: Vergrößerte Darstellung des äußeren Rechkreisels und seiner Anlenkung an den Längsträger gemäß Fig.3a-1
- Fig. 1 b: Heuwerbungsmaschine ausgebildet als Sechskreiselschwader analog Fig.1 in einer Draufsicht in einer Zwischenstellung zur Überführung in die Transportstellung
- Fig. 2b: Heuwerbungsmaschine ausgebildet als Sechskreiselschwader analog Fig.1 in einer Vorderansicht in einer Zwischenstellung zur Überführung in die Transportstellung
- Fig. 3b: Heuwerbungsmaschine ausgebildet als Sechskreiselschwader analog Fig.1 in einer Seitenansicht in einer Zwischenstellung zur Überführung in die Transportstellung
- Fig.1b-1: Vergrößerte Darstellung eines Ausschnitts aus Fig.1 b
- Fig.1b-2: Vergrößerte Darstellung eines Ausschnitts aus Fig.1b-1 und dabei insbesondere das Koppelgetriebe
- Fig. 1c: Heuwerbungsmaschine ausgebildet als Sechskreiselschwader analog Fig.1 in einer Draufsicht in einer Zwischenstellung zur Überführung in die Transportstellung
- Fig. 2c: Heuwerbungsmaschine ausgebildet als Sechskreiselschwader analog Fig.1 in einer Vorderansicht in einer Zwischenstellung zur Überführung in die Transportstellung
- Fig. 3c: Heuwerbungsmaschine ausgebildet als Sechskreiselschwader analog Fig.1 in einer Seitenansicht in einer Zwischenstellung zur Überführung in die Transportstellung
- Fig. 1d: Heuwerbungsmaschine ausgebildet als Sechskreiselschwader analog Fig.1 in einer Draufsicht in einer Zwischenstellung zur Überführung in die Transportstellung
- Fig. 2d: Heuwerbungsmaschine ausgebildet als Sechskreiselschwader analog Fig.1 in einer Vorderansicht in einer Zwischenstellung zur Überführung in die Transportstellung
- Fig. 3d: Heuwerbungsmaschine ausgebildet als Sechskreiselschwader analog Fig.1 in einer Seitenansicht in einer Zwischenstellung zur Überführung in die Transportstellung
- Fig. 1e: Heuwerbungsmaschine ausgebildet als Sechskreiselschwader analog Fig.1 in einer Draufsicht in einer Zwischenstellung zur Überführung in die Transportstellung
- Fig. 2e: Heuwerbungsmaschine ausgebildet als Sechskreiselschwader analog Fig.1 in einer Vorderansicht in einer Zwischenstellung zur Überführung in die Transportstellung
- Fig. 3e: Heuwerbungsmaschine ausgebildet als Sechskreiselschwader analog Fig.1 in einer Seitenansicht in einer Zwischenstellung zur Überführung in die Transportstellung
- Fig. 1f: Heuwerbungsmaschine ausgebildet als Sechskreiselschwader analog Fig.1 in einer Draufsicht in einer Zwischenstellung zur Überführung in die Transportstellung
- Fig. 2f: Heuwerbungsmaschine ausgebildet als Sechskreiselschwader analog Fig.1 in einer Vorderansicht in einer Zwischenstellung zur Überführung in die Transportstellung
- Fig. 3f: Heuwerbungsmaschine ausgebildet als Sechskreiselschwader analog Fig.1 in einer Seitenansicht in einer Zwischenstellung zur Überführung in die Transportstellung

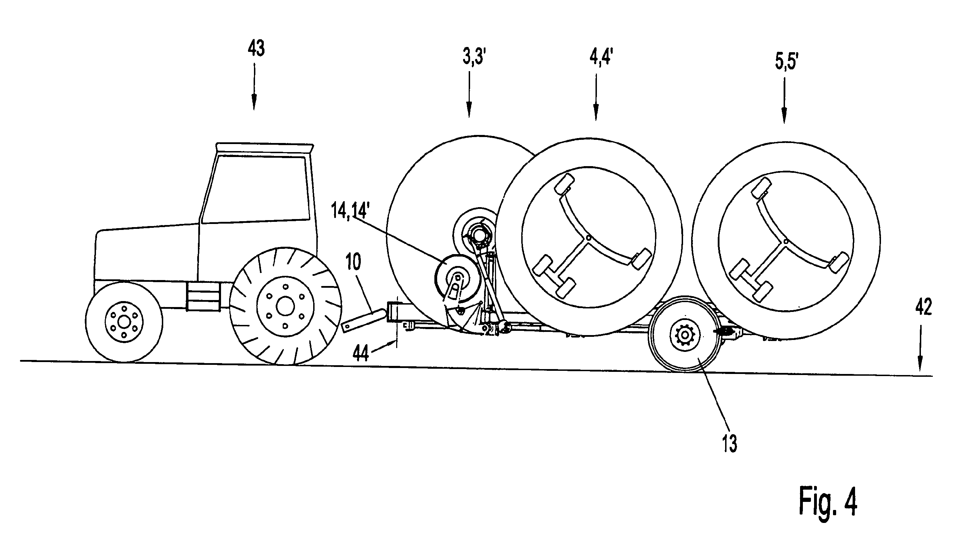

- Fig.4: Heuwerbungsmaschine ausgebildet als Sechskreiselschwader analog Fig.1 in einer Vorderansicht in seiner endgültigen Transportstellung.

In den Figurendarstellungen Fig.1 bis Fig. 3 ist eine erfindungsgemäße Heuwerbungsmaschine, ausgebildet als Sechskreiselschwader, nach den Regeln des technischen Zeichnens in der klassischen Darstellungsweise von Vorderansicht, Seitenansicht und Draufsicht auf einem Blatt dargestellt. Dabei stellt Fig.2 die Vorderansicht, Fig.1 die Draufsicht und Fig.3 die Seitenansicht, allerdings ohne Zugfahrzeug entgegen der Fahrtrichtung F gesehen, dar. Diese Darstellungsweise ist in den nachfolgenden Figuren dem Wesen dieser Darstellungsart entsprechend beibehalten.

Fig. 1, Fig.2 und Fig.3 zeigen einen erfindungsgemäßen Sechskreiselschwader 2 in Arbeitsstellung mit einem Zugfahrzeug 43. Die Fahrtrichtung ist mit dem Fahrtrichtungspfeil F gekennzeichnet. Der Sechskreiselschwader 2 umfasst im wesentlichen die äußeren Rechkreisel 3,3', die mittleren Rechkreisel 4,4' und die inneren Rechkreisel 5.5', die äußeren Ausleger 6,6', die mittleren Ausleger 7,7', die inneren Ausleger 8,8', den Längsträger 9,9', den Zugbalken 11 mit seiner Anschlussvorrichtung 10 zur Ankopplung an das Zugfahrzeug 43 und dem Fahrwerk 13, auf dem der größte Anteil des Gewichts des Sechskreiselschwaders 2 am Boden abgestützt wird. Beidseitig der vertikalen Längsmittelebene 15 sind spiegelsymmetrisch zu dieser die Rechkreisel 3,4,5 und 3',4',5'.in heruntergeklappter Arbeitsstellung dargestellt. Es handelt sich demnach um einen Mittelschwader.

Der jeweils äußere Rechkreisel 3,3' übergibt sein Rechgut an den benachbarten und entgegengesetzt der Fahrtrichtung F nachgeordneten Rechkreisel 4,4' und dieser wiederum an die benachbarten und entgegengesetzt der Fahrtrichtung F ebenfalls nachgeordneten Rechkreisel 5,5', wobei letztere das Rechgut als Schwad ablegen.

Alle Rechkreisel sind in an sich bekannter Weise an den freien Enden von Auslegern 6,6',7,7',8,8' kardanisch angelenkt, wobei sich die Rechkreisel 6,6',7,7',8,8' dabei in Ihrer Arbeitsstellung auf eigenen Fahrwerken bodenkopierend abstützen. Da derartige Fahrwerke dem Fachmann hinreichend bekannt sind, erübrigt sich die weitere Beschreibung dieser Rechkreiselfahrwerke.

Die Fig.1a zeigt eine vergrößerte Darstellung der Fig. 1 ohne Zugfahrzeug und weitere vergrößerte Details aus der Fig.1a sind den Figurendarstellungen Fig.1a-1 und Fig. 1a-2 zu entnehmen. Analog zeigt die Fig.2a eine vergrößerte Darstellung der Fig. 2, und Fig. 3a eine vergrößerte Darstellung der Fig. 3, wobei den Figuren Fig.3a-1 und Fig.3a-2 ebenfalls weitere vergrößerte Details der Fig.3a zu entnehmen sind.

Die mittleren Ausleger 7,7' und die inneren Ausleger 8,8' sind dabei in an sich bekannten Klappgelenken 16,16'17,17' an den Längsträgern 9,9' angelenkt, so dass sich die Rechkreisel 4,4'.5,5' in an sich ebenfalls bekannter Art und Weise von einer bodennahen Arbeitsstellung in eine bodenferne Transportstellung und umgekehrt durch eine Schwenkbewegung um die horizontalen Schwenkachsen 18,18' der Klappgelenke 16,16'17,17' verschwenken lassen.

Die Längsträger 9,9' sind über ein Koppelgetriebe 23, bestehend aus den Koppelelementen 24,24';25,25' schwenkbeweglich mit dem Zugbalken 11 verbunden. Die Koppelelemente 24,24' sind in den Drehgelenken 26,26' mit den Längsträgern 9,9' und in den Drehgelenken 27,27' mit einem Schubgelenk 28, welches verschiebbar am Zugbalken 11 gelagert ist, verbunden. Endseitig am Zugbalken 11 sind die Koppelelemente 25,25' in den Drehgelenken 30,30' und an den Längsträgern 9,9' in den Drehgelenken 29,29' angeschlagen. Das Koppelgetriebe 23 verfügt prinzipiell über zwei Antriebsglieder, wobei das erste Antriebsglied aus dem Hydraulikzylinder 22 besteht, dessen Zylindergehäuse am Zugbalken 11 und dessen Kolbenstangenkopf am Schubgelenk 28 angeschlagen ist, und wobei das zweite Antriebsglied, bestehend aus zwei Hydraulikzylindern 31,31' einerseits an dem Zugbalken 11 in den Drehgelenken 32,32' und andererseits an den Koppelelementen in den Drehgelenken 33,33' angeschlagen ist. Mit dem ersten Antriebsglied bzw. dem Hydraulikzylinder 22 können die Zugbalken 9,9' um die Drehgelenke 29,29' und mit dem zweiten Antriebsglied bzw. dem Hydraulikzylinder 31,31' können die Längsträger 9,9' gleichzeitig um die Drehgelenke 29,29' und 30,30' verschwenkt werden. Somit können die Längsträger 9,9' je nach Beaufschlagung der Hydraulikzylinder 22 oder 31,31' entweder Schwenkbewegungen um die Drehgelenke 29,29' oder Schwenkbewegungen gleichzeitig um die Drehgelenke 29,29' und 30,30' ausführen, welches erhebliche Vorteile für die Überführung der Heuwerbungsmaschine 1 bzw. des Sechskreiselschwaders 2 in eine möglichst kurze Gespannlänge in sich birgt.

Die Darstellungen der Figuren Fig.1b, Fig.2b und Fig.3b sind analog der Figuren Fig.1 bis Fig.3 zu sehen, d.h. Fig. 2b ist die Vorderansicht, Fig. 1b die Draufsicht und Fig.3b die Seitenansicht des Kreiselschwaders 2. Fig.1b zeigt eine Zwischenstellung der Heuwerbungsmaschine zur Überführung in die Transportstellung und Fig.1b-1 zeigt eine vergrößerte Darstellung eines Ausschnitts aus Fig.1b, und weiterhin zeigt Fig.1b1-2 nochmals einen vergrößerten Ausschnitt aus Fig.1b-1. Diese Figuren verdeutlichen die veränderte Lage der Koppelelemente 24,24' und 25,25' .des Koppelgetriebes 23 gegenüber der Arbeits- und Betriebsstellung entsprechend Fig.1a-1. Durch die Druckbeaufschlagung des Hydraulikzylinders 22 auf der Kolbenbodenseite fährt dessen Kolbenstange 38 aus dem Zylindergehäuse 34 heraus und bewegt den Führungsschlitten 37, welcher zugleich als Schubgelenk 28 ausgebildet von dem Zugbalken 11 in einer Prismenführung aufgenommen ist, längs des Zugbalkens 11 in Fahrtrichtung F. Die an dem Führungsschlitten 37 in den Gelenkpunkten 27,27' angeschlagenen Koppelelemente 24,24' greifen kräftemäßig an den Gelenkpunkten 26,26' an und verschwenken die Längsträger 9,9' um die Gelenkpunkte 29,29'. Gleichzeitig werden die Hydraulikzylinder 31,31' kolbenstangenseitig druckbeaufschlagt, so dass deren Kolbenstangen 40,40' in ihre Zylindergehäuse 39,39' einfahren, wodurch die Koppelelemente 25,25' um die Gelenkpunkte 30,30' aufeinander zubeweglich verschwenkt werden. Es handelt sich demnach um ein sechsgliedriges Koppelgetriebe 23 mit insgesamt drei hydraulischen Stellantrieben 22,25,25'. Die dadurch erzwungene Bewegungsform des Koppelgetriebes 23 führt dazu, dass die Längsträger 9,9' eine Schwenkbewegung in Richtung Zugbalken 11 um die Gelenkpunkte 29,29' ausführen und wobei die Gelenkpunkte 29,29' selber ebenfalls eine Schwenkbewegung in Richtung Zugbalken 11 und zugleich entgegengesetzt der Fahrtrichtung F ausführen. Im Ergebnis werden die Rechkreisel 4,4',5,5',6,6' somit gleichzeitig in Richtung des Zugbalkens 11 und entgegen der Fahrtrichtung F verschwenkt.

Die Darstellungen der Figuren Fig.1c, Fig.2c und Fig.3c sind analog der Figuren Fig.1 bis Fig.3 zu sehen, d.h. Fig. 2c ist die Vorderansicht, Fig. 1c die Draufsicht und Fig.3c die Seitenansicht des Sechskreiselschwaders 2. Dargestellt ist der fortschreitende Prozess der Überführung des Kreiselschwaders 2 im Anschluss an die dargestellte Situation gemäß den Figurendarstellungen Fig.1b bis Fig.3b. In der dargestellten Situation sind alle Rechkreisel 3,3',4,4',5,5' mit ihren Auslegern in an sich bekannter Weise um ihre horizontalen Klappachsen hochgeklappt.

Dieses gilt auch für die äußeren Rechkreisel 3,3', die aber auf Grund ihrer Anlenkung mit dem äußeren Ausleger 6,6' an die Längsträger 9,9' und des Verklappens um die horizontalen Schwenkachsen 20 des zweiachsigen Schwenkgelenks 19 bzw. 19' im Gegensatz zu ihren benachbarten Rechkreiseln 4,5 bzw. 4',5', die Ausrichtung überwiegend in Fahrtrichtung F aufweisen, jedoch eine Ausrichtung überwiegend quer zur Fahrtrichtung F aufweisen. Diese geht insbesondere deutlich aus der Fig. 1d hervor. Es handelt sich hierbei gewissermaßen um eine Momentanaufnahme im Laufe des Bewegungsvorgangs der Überführung des Kreiselschwaders von seiner Betriebsstellung in seine Transportstellung.

Die Darstellungen der Figuren Fig.1d, Fig.2d und Fig.3d sind analog der Figuren Fig.1 bis Fig.3 zu sehen, d.h. Fig. 2d ist die Vorderansicht, Fig. 1d die Draufsicht und Fig.3d die Seitenansicht des Sechskreiselschwaders 2. Dargestellt ist der weiter fortschreitende Prozess der Überführung des Sechskreiselschwaders 2 im Anschluss an die dargestellte Situation gemäß den Figurendarstellungen Fig.1c bis Fig.3c. Nach dem Hochklappen der äußeren Rechkreisel 3,3' gemäß den Ausführungen der Figuren Fig. 1c bis 3c werden dann die äußeren Rechkreisel 3,3' durch das Verschwenken der äußeren Ausleger 6,6' um die vertikale Schwenkachsen 21,21', ausgebildet als vertikale Hochachsen 44, in Schwenkrichtung 41,41' relativ zu den Rechkreiseln 4,5 bzw. 4'.5' bzw. den Längsträgern 9,9,' verdreht. Dabei stützen sich die Rechkreisel bzw. die Längsträger 9,9', weiterhin über die Stützräder 14,14' am Boden ab. Dieser Verschwenkvorgang der Rechkreisel 3,3' wird solange fortgeführt, bis dass die äußeren Rechkreisel 3,3' eine Lage auf der Innenseite der Längsträger 9,9', einnehmen, so dass diese nunmehr eine Lage zwischen dem Zugbalken 11 und dem sie aufnehmenden Längsträger 9,9', einnehmen. Die Endstellung dieses Verschwenkvorgangs der äußeren Rechkreisel 3,3' um die vertikalen Schwenkachsen 21,21' ist in den Figuren Fig.1e, Fig.2e und Fig.3e dargestellt, wobei bei diesen Figurendarstellungen gilt, dass ihre Darstellungsweise, Vorderansicht, Draufsicht und Seitenansicht analog der Figuren Fig.1 bis Fig.3 zu sehen ist.

Die Darstellungen der Figuren Fig.1f, Fig.2f und Fig.3f sind analog der Figuren Fig.1 bis Fig.3 zu sehen, d.h. Fig. 2f ist die Vorderansicht, Fig. 1f die Draufsicht und Fig.3f die Seitenansicht des Kreiselschwaders 2. Dargestellt ist der fortschreitende Prozess der Überführung des Kreiselschwaders 2 im Anschluss an die dargestellte Situation gemäß den Figurendarstellungen Fig.1e bis Fig.3e. In der dargestellten Situation befinden sich alle Rechkreisel 3,3',4,4',5,5' in der endgültigen Transportposition. Diese wurde durch das weitere Verschwenken der Längsträger 9,9' an den Zugbalken heran herbeigeführt. Dazu wurden die Hydraulikzylinder 22,31,31' nochmals druckbeaufschlagt, so dass das Koppelgetriebe 23 erneut betätigt wurde und der Führungsschlitten 37 in seine in Fahrtrichtung F äußerste Lage verschoben wurde. Dieses hat zur Folge, dass die Längsträger 9,9' eine Lage etwa parallel zum Zugbalken 11 einnehmen und die äußeren Rechkreisel 3,3' sich weitestgehend zwischen und oberhalb der Längsträger 9,9' befinden und sich dabei zumindest teilweise zwischen den ebenfalls an den Zugbalken 11 heran geschwenkten mittleren Rechkreiseln 4,4' befinden, so dass sich diesbezüglich eine in Fahrtrichtung gesehene Überdeckung 45 einstellt. Diese Überdeckung 45 liefert einen erheblichen Beitrag zur Verkürzung der Transportlänge 46 der Heuwerbungsmaschinen 1 bzw. des Sechskreiselschwaders 2.

Fig. 4 zeigt den Kreiselschwader 2 nunmehr in seiner endgültigen Transportstellung mit vorgespanntem Zugfahrzeug 43. Wie der Fig.2f zu entnehmen ist, befanden sich in der Darstellung die Stützräder 14,14' noch in der Bodeneingriffsstellung, d.h. sie haben noch Kontakt zum Boden 42 als Aufstandsfläche des Fahrwerks 13. In Fig.4 hingegen sind auch die Stützräder 14,14' in ihre ebenfalls endgültige Transportstellung hochgeklappt, so dass sie einerseits keinen Beitrag zur Transportbreite liefern und andererseits wird dadurch der Kreiselschwader zu einem reinen Einachsigen Anhänger. Durch diese erfinderische Ausgestaltung der Heuwerbungsmaschine 1 bzw. des Kreiselschwaders 2 ergibt sich einerseits eine kurze Transportlänge 46 aber ebenfalls auch eine kurze Gespannlänge G in der ausgeklappten Arbeitsstellung, welches gute Lenkeigenschaften ohne die Notwendigkeit eines lenkbaren Fahrwerks 13 ermöglicht und welches dabei den technischen Aufwand erheblich mindert und damit zu einer verbesserten Wirtschaftlichkeit der Heuwerbungsmaschinen beiträgt. Diese Ausgestaltung ermöglicht zudem für die Bedienperson eine verbesserte visuelle Sichtkontrolle über die äußeren Rechkreisel 3,3' während der Arbeitsfahrt, da sich die äußeren Rechkreisel 3,3' näher am Zugfahrzeug 43 befinden.

### Bezugszeichenliste

- 1: Heuwerbungsmaschine
- 2: Sechskreiselschwader
- 3,3': äußere Rechkreisel
- 4,4': mittlere Rechkreisel
- 5,5': innere Rechkreisel
- 6,6': äußere Ausleger
- 7,7': mittlere Ausleger
- 8,8': innere Ausleger
- 9,9': Längsträger
- 10: Anschlussvorrichtung
- 11: Zugbalken
- 12,12': Koppelelement
- 13: Fahrwerk
- 14,14': Stützrad
- 15: vertikale Längsmittelebene
- 16,16': Klappgelenk
- 17,17': Klappgelenk
- 18,18': horizontale Schwenkachse
- 19,19': zweiachsiges Schwenkgelenk
- 20: horizontale Schwenkachse
- 21,21': vertikale Schwenkachse
- 22: Hydraulikzylinder, hydraulischer Stellantrieb
- 23: Koppelgetriebe
- 24,24': Koppelelement
- 25,25': Koppelelement
- 26,26': Drehgelenk, Gelenkpunkt
- 27,27': Drehgelenk, Gelenkpunkt
- 28: Schubgelenk
- 29,29': Drehgelenk, Gelenkpunkt
- 30,30': Drehgelenk, Gelenkpunkt
- 31,31': Hydraulikzylinder, Stellantriebe
- 32,32': Drehgelenk
- 33,33': Drehgelenk
- 34: Zylindergehäuse
- 35: Anschlagpunkt
- 36: Anschlagpunkt
- 37: Führungsschlitten
- 38: Kolbenstange
- 39,39': Zylindergehäuse
- 40,40': Kolbenstange
- 41,41': Schwenkrichtung
- 42: Boden
- 43: Zugfahrzeug, Traktor
- 44: Hochachse
- 45: Überdeckung
- 46: Transportlänge
- A: Arbeitsbreite
- B: Schwadbreite
- F: Fahrtrichtung
- G: Gespannlänge
- α: Abwinkelung

## Patentansprüche

1. Heuwerbungsmaschine, insbesondere zum Schwaden von landwirtschaftlichem Halmgut mit sechs umlaufend angetriebenen und über Stützräder auf dem Erdboden abstützbaren sowie über Ausleger aus einer Arbeits- und Betriebsstellung in eine verschwenkte Transportstellung überführbare Rechkreisel, wobei die Ausleger der Rechkreisel an V-förmig horizontal verschwenkbaren inneren Längsträgern verklappbar angelenkt sind und die Rechkreisel in der Arbeits- und Betriebsstellung in Fahrtrichtung im wessentlichen V-förmig zueinander ausgerichtet sind, **dadurch gekennzeichnet, dass** die Arbeitsbreite (A) bestimmenden äußeren Rechkreisel (3, 3') an äußeren Auslegern (6,6') angelenkt sind und die äußeren Ausleger (8,6') in zweiachsigen Schwenkgelenken (19,19') horizontal und vertikal verschwenkbar an den V-förmig verschwenkbaren Längsträgern (9,9') angelenkt sind, wodurch die äußeren Rechkreisel (3,3') eine Transportlage beidseitig des Zugbalkens (11) und dabei zugleich zwischen den beiden Längsträgern (9,9') einnehmen.

2. Heuwerbungsmaschine nach Anspruch 1, **dadurch gekennzeichnet, dass** die äußeren Ausleger (6,6') in ihrer Arbeitsstellung im Wesentlichen eine Verlängerung der Längserstreckung der Längsträger (9,9') beinhalten.

3. Heuwerbungsmaschine nach Anspruch 1, **dadurch gekennzeichnet, dass** die äußeren Ausleger (6,6') mit einem zweiachsigen Schwenkgelenk (19,19') an ihren Längsträgern (9,9') angelenkt sind, welches eine erste Schwenkachse (20) als horizontale Schwenkachse und eine zweite Schwenkachse (21) als vertikale Schwenkachse aufweist.

4. Heuwerbungsmaschine nach Anspruch 1, **dadurch gekennzeichnet, dass** die äußeren Ausleger (6,6') zwei Schwenkbewegungen in unterschiedlichen Schwenkebenen ausführen können, und jeder äußere Rechkreisel (3,3') um seine horizontale Schwenkachse (20) von einer bodennahen in eine bodenferne erste Lage und um seine zweite vertikale Schwenkachse (21) in eine bodenferne zweite Lage als endgültige Transportlage verschwenkt werden kann.

5. Heuwerbungsmaschine nach Anspruch 1, **dadurch gekennzeichnet, dass** die Rechkreisel (3,3') in ihrer Transportlage zumindest teilweise zwischen den benachbarten und hochgeklappten mittleren Rechkreiseln (4,4') liegen.

6. Heuwerbungsmaschine nach Anspruch 1, **dadurch gekennzeichnet, dass** die äußeren Rechkreisel sich in der Transportposition sich im Wesentlichen in einer Lage oberhalb des Zugbalkens (11) befinden.

7. Heuwerbungsmaschine nach Anspruch 1 und 2, **dadurch gekennzeichnet, dass** die erste und zweite Schwenkachse (20,21) des zweiachsigen Schwenkgelenks (19,19') schneidend oder windschief zueinander verlaufen.

8. Heuwerbungsmaschine nach Anspruch 1 und 2, **dadurch gekennzeichnet, dass** die Längsträger (9,9') in ihrer Längserstreckung eine horizontale Abwinkelung (α) aufweisen.

9. Heuwerbungsmaschine nach Anspruch 1 und 2, **dadurch gekennzeichnet, dass** die Längsträger (9,9') ein von einer bodennahen in eine bodenferne Lage überführbares Stützrad aufweisen.

10. Heuwerbungsmaschine nach Anspruch 1 und 2, **dadurch gekennzeichnet, dass** die Längsträger (9,9') mittels Koppelelemente (12,12') mit dem Zugbalken (11) endseitig angelenkt sind.

11. Heuwerbungsmaschine nach Anspruch 9, **dadurch gekennzeichnet, dass** die äußeren Ausleger (6,6') um die Gelenkpunkte ihrer Koppelelemente (12,12') nach dem Prinzip eines Koppelgetriebes verschwenkbar sind.

12. Heuwerbungsmaschine nach Anspruch 9 und 10, **dadurch gekennzeichnet, dass** die Koppelelemente (12,12') die Rechkreisel (4,4',5,5',6,6') relativ zum Zugbalken (11) schwenkbeweglich verschieben können.

13. Heuwerbungsmaschine nach Anspruch 11, **dadurch gekennzeichnet, dass** die Rechkreisel (4,4',5,5',6,6') relativ zur Fahrtrichtung (F) schwenkbeweglich verschiebbar sind.

14. Heuwerbungsmaschine nach Anspruch 11, **dadurch gekennzeichnet, dass** die Rechkreisel (4,4',5,5',6,6') quer zur Fahrtrichtung (F) schwenkbeweglich verschiebbar sind und die Schwadbreite (B) dadurch veränderbar ist.

## Claims

1. A haymaking machine, in particular for swathing agricultural stalk material comprising six raking rotors which are driven in rotation and which can be supported on the ground by way of support wheels and which can be transferred by way of cantilever arms from a working and operative position into a pivoted transport position, wherein the cantilever arms of the raking rotors are pivotably mounted to inner longitudinal carriers which are horizontally pivotable in a V-shape and the raking rotors are oriented substantially in a V-shape relative to each other in the direction of travel in the working and operative position, **characterised in that** the outer raking rotors (3, 3') determining the working width (A) are pivotably mounted to outer cantilever arms (6, 6') and the outer cantilever arms (6, 6') are mounted pivotably horizontally and vertically in double-axis joints (19, 19') to the longitudinal carriers (9, 9') which are pivotable in a V-shape whereby the outer raking rotors (3, 3') assume a transport position on both sides of the draw bar (11) and **in that** case at the same time between the two longitudinal carriers (9, 9').

2. A haymaking machine according to claim 1 **characterised in that** in their working position the outer cantilever arms (6, 6') substantially include a prolongation of the longitudinal extent of the longitudinal carriers (9, 9').

3. A haymaking machine according to claim 1 **characterised in that** the outer cantilever arms (6, 6') are pivotably mounted with a double-axis pivot joint (19, 19') to their longitudinal carriers (9, 9'), which joint has a first pivot axis (20) as the horizontal pivot axis and a second pivot axis (21) as the vertical pivot axis.

4. A haymaking machine according to claim 1 **characterised in that** the outer cantilever arms (6, 6') can perform two pivotal movements in different pivotal planes and each outer raking rotor (3, 3') can be pivoted about its horizontal pivot axis (20) from a position near the ground into a first position remote from the ground and about its second vertical pivot axis (21) into a second position remote from the ground as the definitive transport position.

5. A haymaking machine according to claim 1 **characterised in that** in their transport position the raking rotors (3, 3') are disposed at least partially between the adjacent and upwardly pivoted central raking rotors (4, 4').

6. A haymaking machine according to claim 1 **characterised in that** in the transport position the outer raking rotors are disposed substantially in a position above the draw bar (11).

7. A haymaking machine according to claim 1 and claim 2 **characterised in that** the first and second pivot axes (20, 21) of the double-axis pivot joint (19, 19') extend in intersecting or skew relationship with each other.

8. A haymaking machine according to claim 1 and claim 2 **characterised in that** the longitudinal carriers (9, 9') have a horizontal angling (α) in their longitudinal extent.

9. A haymaking machine according to claim 1 and claim 2 **characterised in that** the longitudinal carriers (9, 9') have a support wheel which can be transferred from a position near the ground to a position remote from the ground.

10. A haymaking machine according to claim 1 and claim 2 **characterised in that** the longitudinal carriers (9, 9') are pivotably connected at an end to the draw bar (11) by means of coupling elements (12, 12').

11. A haymaking machine according to claim 9 **characterised in that** the outer cantilever arms (6, 6') are pivotable about the hinge points of their coupling elements (12, 12') on the basis of the principle of a coupling linkage.

12. A haymaking machine according to claim 9 and claim 10 **characterised in that** the coupling elements (12, 12') can pivotably movably displace the raking rotors (4, 4', 5, 5', 6, 6') relative to the draw bar (11).

13. A haymaking machine according to claim 11 **characterised in that** the raking rotors (4, 4', 5, 5', 6, 6') are pivotably movably displaceable relative to the direction of travel (F).

14. A haymaking machine according to claim 11 **characterised in that** the raking rotors (4, 4', 5, 5', 6, 6') are pivotably movably displaceable transversely relative to the direction of travel (F) and the swathe width (B) is variable thereby.

## Revendications

1. Machine de fenaison, en particulier pour l'andainage de produit agricole en tiges, comportant six rotors de râtelage entraînés en rotation et pouvant être supportés sur le sol par des roues d'appui ainsi que déplacés par des bras porteurs d'une position de travail et de service vers une position de transport basculée, les bras porteurs des rotors de râtelage étant articulés de manière rabattable sur des longerons intérieurs pouvant pivoter horizontalement en forme de V, et, dans la position de travail et de service, les rotors de râtelage étant orientés les uns par rapport aux autres sensiblement en forme de V dans la direction de marche, **caractérisée en ce que** les rotors de râtelage extérieurs (3, 3') qui déterminent la largeur de travail (A) sont articulés sur des bras porteurs extérieurs (6, 6') et les bras porteurs extérieurs (6, 6') sont articulés de manière pivotante horizontalement et verticalement dans des articulations pivotantes biaxiales (19, 19') sur les longerons (9, 9') pouvant pivoter horizontalement en forme de V, de sorte que les rotors de râtelage extérieurs (3, 3') prennent une position de transport des deux côtés de la poutre d'attelage (11) et, en même temps, entre les deux longerons (9, 9').

2. Machine de fenaison selon la revendication 1, **caractérisée en ce que**, dans leur position de travail, les bras porteurs extérieurs (6, 6') forment sensiblement un prolongement de l'extension longitudinale des longerons (9, 9').

3. Machine de fenaison selon la revendication 1, **caractérisée en ce que** les bras porteurs extérieurs (6, 6') sont articulés sur leurs longerons (9, 9') par une articulation pivotante biaxiale (19, 19') qui présente un premier axe de pivotement (20) comme axe de pivotement horizontal et un deuxième axe de pivotement (21) comme axe de pivotement vertical.

4. Machine de fenaison selon la revendication 1, **caractérisée en ce que** les bras porteurs extérieurs (6, 6') peuvent effectuer deux mouvements de pivotement dans des plans de pivotement différents, et chaque rotor de râtelage extérieur (3, 3') peut être basculé, autour de son axe de pivotement horizontal (20), d'une première position proche du sol vers une première position éloignée du sol et, autour de son deuxième axe de pivotement (21) vertical, vers une deuxième position éloignée du sol formant la position de transport définitive.

5. Machine de fenaison selon la revendication 1, **caractérisée en ce que**, dans leur position de transport, les rotors de râtelage (3, 3') se trouvent au moins partiellement entre les rotors de râtelage intermédiaires (4, 4') voisins et relevés.

6. Machine de fenaison selon la revendication 1, **caractérisée en ce que**, dans leur position de transport, les rotors de râtelage extérieurs se trouvent sensiblement au-dessus de la poutre d'attelage (11).

7. Machine de fenaison selon les revendications 1 et 2, **caractérisée en ce que** le premier et le deuxième axe de pivotement (20, 21) de l'articulation pivotante biaxiale (19, 19') s'étendent de manière sécante ou oblique l'un par rapport à l'autre.

8. Machine de fenaison selon les revendications 1 et 2, **caractérisée en ce que** les longerons (9, 9') présentent un coude horizontal (α) dans leur extension longitudinale.

9. Machine de fenaison selon les revendications 1 et 2, **caractérisée en ce que** les longerons (9, 9') présentent une roue d'appui pouvant être déplacée d'une position proche du sol vers une position éloignée du sol.

10. Machine de fenaison selon les revendications 1 et 2, **caractérisée en ce que**, à une extrémité, les longerons (9, 9') sont articulés avec la poutre d'attelage (11) au moyen d'éléments de couplage (12, 12').

11. Machine de fenaison selon la revendication 9, **caractérisée en ce que** les bras porteurs extérieurs (6, 6') peuvent pivoter autour des points d'articulation de leurs éléments de couplage (12, 12') selon le principe d'un mécanisme articulé.

12. Machine de fenaison selon les revendications 9 et 10, **caractérisée en ce que** les éléments de couplage (12, 12') peuvent déplacer les rotors de râtelage (4, 4', 5, 5', 6, 6') de manière pivotante par rapport à la poutre d'attelage (11).

13. Machine de fenaison selon la revendication 11, **caractérisée en ce que** les rotors de râtelage (4, 4', 5, 5', 6, 6') sont mobiles en pivotement par rapport à la direction de marche (F).

14. Machine de fenaison selon la revendication 11, **caractérisée en ce que** les rotors de râtelage (4, 4', 5, 5', 6, 6') sont mobiles en pivotement transversalement à la direction de marche (F), ce qui permet de faire varier la largeur de l'andain (B).
